Europäisches Patentamt

European Patent Office

Office européen des brevets

(11) Veröffentlichungsnummer: **0 202 466 B1**

(12) **EUROPÄISCHE PATENTSCHRIFT**

(45) Veröffentlichungstag der Patentschrift: **03.06.92**

(21) Anmeldenummer: **86105076.3**

(22) Anmeldetag: **14.04.86**

(51) Int. Cl.⁵: **B23P 19/04**

(54) Manipulator für Deckelverschluss-Teile.

(30) Priorität: **19.04.85 DE 8511617 U**

(43) Veröffentlichungstag der Anmeldung:
**26.11.86 Patentblatt 86/48**

(45) Bekanntmachung des Hinweises auf die
Patenterteilung:
**03.06.92 Patentblatt 92/23**

(84) Benannte Vertragsstaaten:
**DE FR GB IT**

(56) Entgegenhaltungen:
**DE-A- 2 614 654      FR-A- 2 420 828
FR-A- 2 458 359      US-A- 2 867 329
US-A- 2 994 443      US-A- 4 495 828**

(73) Patentinhaber: **Wirth Maschinen- und
Bohrgeräte-Fabrik GmbH
Kölner Strasse 71-78
W-5140 Erkelenz(DE)**

(72) Erfinder: **Ecker, Karl-Heinz
Wilhelmstrasse 38
W-5140 Erkelenz(DE)**
Erfinder: **Henschenmacher, Helmut
Schwarzer Weg 26
W-5142 Brachelen(DE)**

(74) Vertreter: **Koscholke, Gotthold, Dr.-Ing.
Rheinallee 147
W-4000 Düsseldorf 11(DE)**

EP 0 202 466 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Manipulator nach dem Oberbegriff des Anspruchs 1.

Ein gattungsgemäßer Manipulator ist beispielsweise aus der FR-A-2458359 bekannt.

Der Support ist bei derartigen Vorrichtungen normalerweise derjenige Teil, der die eigentliche Transportbewegung ausführt. Die Last, so der Deckel bzw. eine Schraubenspannvorrichtung, kann dabei von einer zusätzlichen auf oder an dem Support befindlichen Aufnahmeeinrichtung gehalten sein.

Bei bekannten Ausführungen solcher Vorrichtungen weist der Antrieb meist ein unmittelbar am Support angreifendes und sich zusammen mit diesem um dieselbe Wegstrecke bewegendes Teil auf, etwa eine Spindel oder die Kolbenstange einer Kolben-Zylinder-Einheit. Dies bedingt oft einen erheblichen Raumbedarf für die Anordnung der betreffenden Teile und ihre Bewegungsmöglichkeiten. Dadurch ergeben sich Probleme, weil in vielen Einsatzfällen solcher Vorrichtungen der verfügbare Platz sehr begrenzt ist.

Aufgabe der Erfindung ist es, bestehenden Unzulänglichkeiten und Schwierigkeiten abzuhelfen und bei einem Manipulator der eingangs genannten Art eine kompakte Ausbildung bei möglichst einfacher Bauweise zu erreichen. Weitere damit im Zusammenhang stehende Probleme, mit denen sich die Erfindung befaßt, ergeben sich aus der jeweiligen Erläuterung der aufgezeigten Lösung.

Die Erfindung sieht dazu zwischen der Antriebsvorrichtung und dem Support eine wegübersetzende Übertragungseinrichtung vor. Dies bedeutet, daß der Weg, den ein Teil der Antriebsvorrichtung auszuführen hat, kleiner als der dabei erzeugte Weg des Supports ist. Dadurch ergeben sich für die Unterbringung und den Raumbedarf der Antriebsvorrichtung günstige Verhältnisse, was sich außerdem vorteilhaft auf die gesamte Ausbildung des Manipulators, seine Beweglichkeit und seine Einsatzbedingungen auswirkt.

Die Wegübersetzung wird insbesondere im Verhältnis 1 : 2 vorgesehen. Es sind aber auch andere Werte möglich.

Die Übertragungseinrichtung kann flexible Zugorgane, wie etwa Seile oder Ketten, aufweisen, die über eine der gewünschten Übersetzung entsprechende Anordnung von Rollen, Kettenrädern od.dgl. geführt sind.

Bei einer vorteilhaften Ausführung ist als Übertragungseinrichtung wenigstens ein in einem Lagerkörper od.dgl. frei drehbar gelagertes Zahnrad vorgesehen, das gleichzeitig in eine mit Bezug auf die Führung des Supports feststehende Zahnstange und in eine mit dem Support verbundene Zahnstange eingreift, wobei der Lagerkörper od.dgl. mittels der Antriebsvorrichtung verschiebbar ist.

Die Antriebsvorrichtung ist vorteilhaft eine druckmittelbetätigbare Kolben-Zylinder-Einheit, ggfs. auch in Doppelanordnung. Darüber hinaus kommen aber auch noch andere Vorrichtungen in Betracht, namentlich mit elektromotorisch bewegbaren Teilen, z.B. mit einer geradlinig verstellbaren Spindel od.dgl.

Weitere Einzelheiten, Merkmale und Vorteile der Erfindung ergeben sich aus der nachstehenden Erläuterung eines Ausführungsbeispieles, aus der zugehörigen Zeichnung und aus den Ansprüchen.

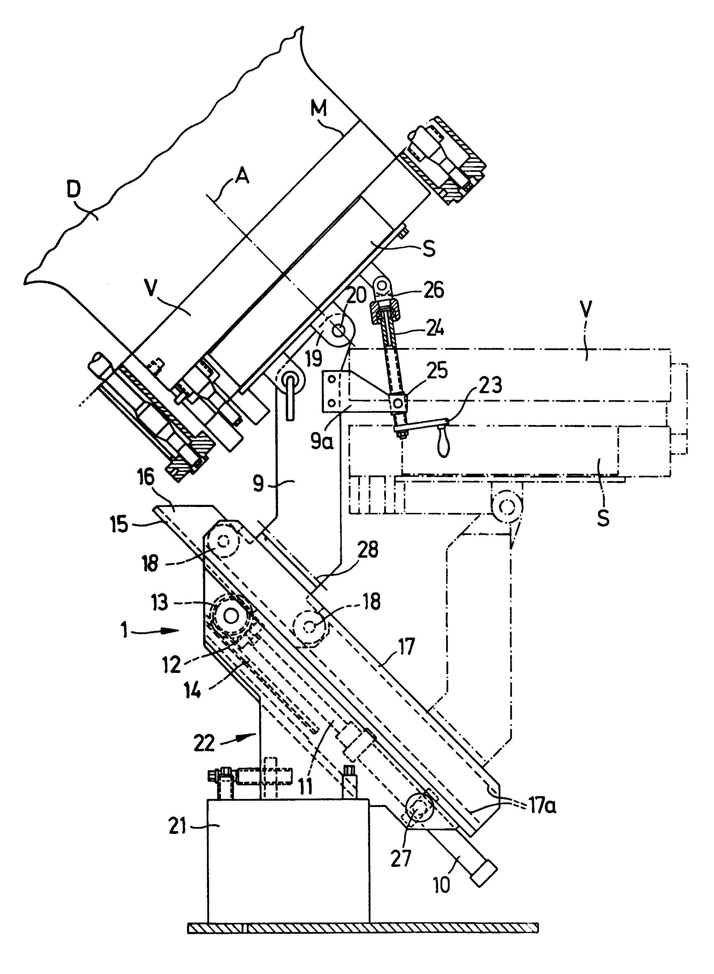

In der Zeichnung ist ein Manipulator gemäß der Erfindung in Seitenansicht dargestellt.

Der insgesamt mit der Ziffer 1 bezeichnete Manipulator dient zum Handhaben von Teilen, die beim Öffnen und Schließen einer Mannloch-Öffnung M eines Druckbehälters D, etwa eines Dampferzeugers in einem Kernkraftwerk, zu bewegen sind. Es ist lediglich die die Öffnung aufweisende Partie des Druckbehälters wiedergegeben. Die Öffnung M wird durch einen Deckel V verschlossen, der in bekannter Weise mit Schraubenbolzen und auf diese aufgeschraubte Muttern befestigt wird. Mittels einer Vorrichtung S können die Schraubenbolzen gespannt werden, ehe die Befestigungsmuttern bis zur Anlage angedreht werden. Solche Schraubenspannvorrichtungen sind in verschiedenen Ausführungen bekannt.

Der Manipulator 1 weist ein Untergestell 21 auf, das den jeweiligen Erfordernissen entsprechend ausgebildet sein und feststehend oder verfahrbar sein kann. Das Untergestell 21 trägt einen Aufsatz 22, der eine Führung 17 für einen Support 16 aufweist. Die Führung 17 hat eine solche Neigung gegenüber der Horizontalen, daß sie parallel zur Mittelachse A der Öffnung M verläuft.

Bei einer vorteilhaften Ausführung weist die Führung 17 zwei mit Abstand voneinander angeordnete Führungsbahnen 17a auf, insbesondere in Form von einander zugewandten Ausnehmungen, Rinnenprofilen od.dgl., während am Support 16 auf jeder Seite zwei Räder oder Rollen 18 vorgesehen sind, die auf den Führungsbahnen laufen. Der Support 16 ist mit einem armförmigen Halter 9 versehen, der an seinem Ende zur schwenkbaren Aufnahme der Schraubenspannvorrichtung S ausgebildet ist. Bei der dargestellten Ausführung weist die letztere an ihrer Unterseite einen gabelförmigen Ansatz 19 auf, der das Ende des Halters 9 umgreift, wobei ein Gelenkzapfen 20 durch Bohrungen dieser Teile hindurchgesteckt ist.

Mittels eines von einer Handkurbel 23 zu betätigenden Spindeltriebs 24, dessen Mutter 25 gelenkig an einem Ausleger 9a des Halters 9 gelagert ist und dessen Lagerkopf 26 über ein Zapfengelenk mit der Schraubenspannvorrichtung an einer außerhalb ihrer Mitte liegenden Stelle verbunden ist, kann die Schraubenspannvorrichtung relativ zum Halter 9 im Winkel verstellt werden, insbesondere aus der mit ausgezogenen Linien gezeigten Arbeitsposition, in der ihre Mittelachse mit der Mittelachse A der Öffnung M zusammenfällt, in eine mit strichpunktierten Linien angedeutete waagerechte Ruheposition und umgekehrt. Diese Winkelverstellung kann, wie dargestellt, zusammen mit dem Deckel V erfolgen oder auch ohne diesen.

Als Antrieb zum Bewegen des Supports 16 in seiner Führung 17 ist bei dem gezeigten Ausführungsbeispiel eine hydraulische Kolben-Zylinder-Einheit 10 vorgesehen, die sich etwa in der Längsmittelebene des Aufsatzes 22 erstreckt und an dem letzteren in Zapfenlagern 27 od.dgl. gehalten ist. Am Ende der Kolbenstange 11 der Einheit 10 befindet sich ein Lagerkörper 12 mit einem darin frei drehbar gelagerten Zahnrad 13. Dieses greift einerseits in eine im Aufsatz 22 ebenfalls etwa in dessen Längsmittelebene im Bereich unterhalb der Kolbenstange 11 befestigte Zahnstange 14 und andererseits in eine an der Unterseite des Supports 16 angebrachte Zahnstange 15 ein. Dadurch wird erreicht, daß der Weg, den der Support 16 zurücklegt, doppelt so groß wie der von der Kolbenstange 11 zurückgelegte Weg ist.

Der Halter 9 kann so auf dem Support 16 befestigt sein, daß er sich leicht von diesem abnehmen läßt. Die Ausbildung kann auch so getroffen werden, daß der Halter 9 relativ zum Support 16 aus einer von diesem vorstehenden Betriebsposition, wie sie die Zeichnung zeigt, in eine weniger Raum beanspruchende Ruheposition und umgekehrt überführbar ist. Dazu kann der Halter 9 insgesamt oder auch nur in seinem oberen Teil relativ zum Support schwenkbar sein, etwa um eine bei der Ziffer 28 schematisch angedeutete Achse. Um den Halter in seiner Betriebsposition zu sichern, ist eine geeignete Arretierung vorgesehen.

**Patentansprüche**

1. Manipulator für beim Öffnen und Schließen einer mit einem Deckel versehenen Öffnung zu bewegende Teile, insbesondere für eine Schraubenspannvorrichtung (S) und/oder den Deckel (V), namentlich beim Verschluß der Mannlöcher von Druckbehältern (D), vornehmlich bei Dampferzeugern, mit einem Support (16), der mittels einer Antriebsvorrichtung (10, 11) in oder an einer Führung (17) parallel zur Mittelachse (A) der Öffnung (M) verstellbar ist, dadurch gekennzeichnet, daß zwischen der Antriebsvorrichtung (10, 11) und dem Support (16) eine wegübersetzende Übertragungseinrichtung (13, 14, 15) vorgesehen ist.

2. Manipulator nach Anspruch 1, dadurch gekennzeichnet, daß als wegübersetzende Übertragungseinrichtung wenigstens ein in einem Lagerkörper (12) od.dgl. frei drehbar gelagertes Zahnrad (13) vorgesehen ist, das gleichzeitig in eine mit Bezug auf die Führung (17) des Supports (16) feststehende Zahnstange (14) und in eine mit dem Support (16) verbundene Zahnstange (15) eingreift, wobei der Lagerkörper (12) od.dgl. mittels der Antriebsvorrichtung (10, 11) verschiebbar ist.

3. Manipulator nach einem der Ansprüche 1 und 2, dadurch gekennzeichnet, daß als Antriebsvorrichtung in an sich bekannter Weise eine druckmittelbetätigbare Kolben-Zylinder-Einheit (10) vorgesehen ist.

4. Manipulator nach einem der Ansprüche 1 bis 3, dadurch gekennzeichnet, daß auf dem Support (16) wenigstens ein armförmiger Halter (9) vorgesehen ist, der an seinem Ende zur schwenkbaren Aufnahme einer Schraubenspannvorrichtung (21) ausgebildet ist.

5. Manipulator nach Anspruch 4, dadurch gekennzeichnet, daß der Halter (9) vom Support (16) abnehmbar ist.

6. Manipulator nach Anspruch 4, dadurch gekennzeichnet, daß der Halter (9) relativ zum Support (16) aus einer von diesem vorstehenden Betriebsposition in eine weniger Raum beanspruchende Ruheposition und umgekehrt überführbar ist.

**Claims**

1. A manipulator for elements which are to be moved when opening and closing an opening provided with a cover, in particular for a screw-tightening device (5) and/or the cover (V), particularly when closing the manholes of pressure vessels (D), especially in the case of steam generators, with a support (16) which is adjustable parallel to the central axis (A) of the opening (M) in or on a guide (17) by means of a drive device (10, 11), characterised in that a path-translating transmission device (13, 14, 15) is provided between the drive device (10, 11) and the support (16).

2. A manipulator according to Claim 1, characterised in that at least one gearwheel (13), mounted so as to be freely rotatable in a bearing body (12) or the like, is provided as a path-translating transmission device, which gearwheel (13) at the same time engages in a rack (14) which is stationary in relation to the guide (17) of the support (16) and in a rack (15) connected to the support (16), the bearing body (12) or the like being displaceable by means of the drive device (10, 11).

3. A manipulator according to one of Claims 1 and 2, characterised in that a piston-cylinder unit (10), operable by pressure medium, is provided as a drive device in a manner known per se.

4. A manipulator according to any one of Claims 1 to 3, characterised in that at least one arm-shaped holder (9) is provided on the support (16), the end of this holder (9) being formed so as to receive a screw-tightening device (21) in a swivelling manner.

5. A manipulator according to Claim 4, characterised in that the holder (9) is detachable from the support (16).

6. A manipulator according to Claim 4, characterised in that the holder (9) can be transferred relative to the support (16) from an operational position projecting from this support into a rest position which takes up less space, and vice versa.

**Revendications**

1. Manipulateur pour pièces à déplacer lorsqu'on ouvre ou ferme une ouverture pourvue d'un couvercle, notamment pour un dispositif (S) de serrage de goujons filetés et/ou ledit couvercle (V), notamment pour la fermeture des trous d'homme de cuves sous pression (D), en particulier dans le cas de générateurs de vapeur, ce manipulateur comprenant un support (16) qui est agencé de façon à pouvoir être déplacé au moyen d'un dispositif d'entraînement (10, 11) dans ou sur un guide (17) parallèle à l'axe central (A) de l'ouverture (M), caractérisé en ce qu'un mécanisme de transmission (13, 14, 15) à démultiplication de course est disposé entre le dispositif d'entraînement (10, 11) et le support (16).

2. Manipulateur suivant la revendication 1, caractérisé en ce que le dispositif de transmission à démultiplication de course est constitué par au moins une roue dentée (13) qui est montée de façon à pouvoir tourner librement dans un corps de palier (12) ou analogue et qui engrène simultanément avec une crémaillère (14) fixe par rapport au guide (17) du support (16) et avec une crémaillère (15) fixée sur le support (16), le corps de palier (12) ou analogue étant agencé de façon à pouvoir être déplacé en translation au moyen du dispositif d'entraînement (10, 11).

3. Manipulateur suivant l'une des revendications 1 et 2, caractérisé en ce que le dispositif d'entraînement est constitué, d'une manière connue en soi, par un vérin (10), à cylindre et piston, actionné par un fluide sous pression.

4. Manipulateur suivant l'une des revendications 1 à 3, caractérisé en ce que le support (16) est muni d'au moins un porte-dispositif (9), en forme de bras, dont l'extrémité est réalisée de façon à recevoir d'une manière basculante un dispositif (S) de serrage de goujons filetés.

5. Manipulateur suivant la revendication 4, caractérisé en ce que le porte-dispositif (9) est agencé de façon à pouvoir être séparé du support (16).

6. Manipulateur suivant la revendication 4, caractérisé en ce que le porte-dispositif (9) est agencé de façon à pouvoir être déplacé, par rapport au support (16), d'une position de service, dans laquelle il fait saillie par rapport à ce support (16), à une position de repos dans laquelle il prend moins de place, et vice versa.